# EUROPEAN PATENT APPLICATION

(11) **EP 1 959 394 A2**
(43) Date of publication of application: **20.08.2008**
(21) Application number: 06841693.2
(22) Date of filing: 14.11.2006
(51) Int. Cl.: G06T 11/00, A41H 3/00

(54) **METHOD OF GENERATING AND USING A VIRTUAL FITTING ROOM AND CORRESPONDING SYSTEM**

(30) Priority: 15.11.2005 ES 200502801
(71) Applicant: Reyes Infografica, S.L., 28013 Madrid (ES)
(72) Inventor: REYES MORENO, Francisco Javier, E-28013 Madrid (ES)
(74) Representative: Maldonado Jordan, Julia
(86) International application number: PCT/ES2006/000623
(87) International publication number: WO 2007/057485

(57) **Abstract**

The invention relates to a method of generating and using a virtual fitting room and to the corresponding system. According to the invention, computer means which are associated with a camera and display means are used to:
- photograph a garment and a user, such as to produce two-dimensional images (1, 2) and generate a series of positional measurements and outlines (C1, C2);
- generate a representation of a flat surface from the image of the garment (1) and superimpose said surface geometrically on the user's outline (C2);
- adapt the flat surface to the user's outline (C2) by performing mathematical simulations in relation to the garment;
- and display an image (3) of the user wearing the garment on the display means by superimposing the representative image of the user (2) with an image of the garment obtained from the two-dimensional image of the garment (1) and the adapted flat surface.

## Description

### Field of the Art

The present invention relates to a method of generating and using a virtual fitting room by means of the acquisition and analysis of two-dimensional images using computer means.

The invention also relates to a system adapted to perform the proposed method.

### Prior State of the Art

Different inventions are known in relation to virtual fitting rooms which use three-dimensional representations of subjects and garments by means of a corresponding scanning and/or by means of virtual model libraries so that a customer can see on screen, for example from his or her house through the Internet, how different garments look on him or her by choosing the virtual three-dimensional representations of the garments and their arrangement on the three-dimensional virtual model of the customer.

This is the case of documents US-A-20040227752, US6473671 or US-A-20050052461; the latter document even proposes animating the virtual representation of the subject with the chosen garment to be tried on virtually.

Although all the mentioned proposals represent an advancement with regard to conventional methods, the complexity of obtaining the mentioned 3-D representations of the users and the very high difficulty associated to the task of obtaining true three-dimensional representations of many garments forms a difficult implementation of such proposals as it involves the use of systems with very high processing and storage capacities that can perform complex and numerous mathematical simulations that are difficult to stabilize, which involves long simulation times, especially if the intention is to design a catalogue with a large amount of garments.

This all makes it very difficult to use said systems in real time, or with short wait times, as would be the case of a customer entering a shop having one of said systems and choosing a real garment or an already scanned image of one obtained in that very moment or taken from an exhibit of garments (database) to try it on for the purpose of seeing the result on a screen without long wait times.

Another drawback of the discussed systems is that the large amount of data needed to perform the mentioned three-dimensional representations make the logistics and diffusion of same, for example for the mentioned case of its use through the Internet, complicated and requiring large bandwidths.

### Summary of the Invention

It seems necessary to provide an alternative to the state of the art which covers lapses therein by providing a less complex virtual fitting room proposal than that represented in the mentioned background documents, but which offers good results (true-to-lifeness of the final virtual representation) with very short wait times, thus allowing more functional and quicker applications, such as that discussed above in relation to the case of a customer entering a shop and choosing a real garment or an already scanned image from a catalogue to virtually try it on.

The present invention relates in a first aspect to a method of generating and using a virtual fitting room, which comprises using computer means associated at least to an image acquisition unit and to display means, to perform the following steps:
a) acquiring, by means of said image acquisition unit, a two-dimensional image of at least one garment under controlled conditions,
b) using said computer means to define a series of reference points in said acquired two-dimensional image of said garment, which is at least one in number, in said step a), and generating a series of measurements relating to the position of said reference points relating to horizontal and vertical coordinates and/or relating to the distance between said reference points,
c) acquiring a two-dimensional image of at least one user in controlled conditions by means of said image acquisition unit,
d) using said computer means to define a series of reference marks in said acquired two-dimensional image of said user, which is at least one in number, in said step c), and generating a series of measurements relating to the position of said reference marks relating to horizontal and vertical coordinates and/or relating to the distance between said reference marks,
being able to first perform steps a) and b) and then steps c) and d) or vice versa, and in that it comprises sequentially performing the following steps after said steps a) to d):
e) obtaining, by said computer means, the outline of said garment and of said user by means of the analysis of said two-dimensional images acquired in steps a) and c),
f) using data relating to said acquired image of the garment, at least in reference to said measurements generated in step b) and to said outline of said garment obtained in step e), to generate by said computer means a two-dimensional graphic representation of same in the form of a flat surface by using polymeshes or parametric surfaces,
g) using said computer means to geometrically superimpose said flat surface generated in step f) on the user's outline obtained in step e),
h) progressively adapting said flat surface to the user's outline, said adaptation consisting of an emulation of at least the drape of said garment on said user, and said adaptation being carried out by performing a mathematical simulation in relation to the garment using the computer means, taking into account a series of representative parameters of physical properties of the fabric of the garment and the data contained in said flat surface, and
i) displaying an image of the user wearing said garment on the display means by superimposing the representative image of the user with an image of the garment obtained from the two-dimensional image of the garment acquired in step a), after applying the changes experienced by said representative flat surface of the garment after said adaptation of said step h).

For a preferred embodiment, said image acquisition means comprise a camera and said acquired images are photographs.

The proposed method generally comprises said user selecting one or more garments to be tried on out of said plurality of garments, said selection being able to be made before said step e), for an embodiment, and performing the remaining steps e) to i) for said selected garment or garments, in which case the selection would be of a virtual representation of the garment, i.e. of said image acquired in step a), or, for another embodiment, making the selection before said steps a) and b) regardless of when said steps c) and d) have been or are going to be performed, and performing the remaining steps a), b) and e) to i) for said selected garment or garments, in which case the selection would be of a real garment before being photographed in said step a).

In other words, the proposed method and system involve considerable flexibility in relation to the application whether one or several garments are chosen and the method is applied to same or if they are chosen from a catalogue or database, which is also much simpler to make.

### Brief Description of the Drawings

The foregoing and other features and advantages will be better understood from the following detailed description of embodiments in relation to the attached drawings, in which:
Figure 1 is a view showing the result of steps a) and b) of the proposed method in the form of a captured screen image resulting from performing the proposed method for one embodiment by means of a computer program executed by the computer means used by the proposed method for an image of a dress,
Figure 2 is a view showing the result of steps c) and d) of the proposed method in another captured screen image for the same embodiment of Figure 1 for an image of a person,
Figures 3 and 4 show the result of step e) of the proposed method for the same embodiment of Figures 1 and 2, i.e. the outline of said dress and of said person, respectively, and
Figure 5 shows for the same embodiment of Figures 1 to 4 and also in the form of a captured screen image, from left to right, the images shown in Figures 1 and 2, as well as the result of applying steps g) to i) of the proposed method after superimposing and adapting the image of the dress to the image of the person.

### Detailed Description of Several Embodiments

The present invention relates in a first aspect to a method of generating and using a virtual fitting room, which comprises using computer means associated at least to an image acquisition unit, preferably a camera, and to display means, to generate a series of steps.

The attached figures illustrate the method proposed by the present invention by means of a series of captured screen images, obtained when a computer program or application responsible for performing the method proposed for an embodiment is executed by said computer means.

The steps of the method are the following:
a) photographing with said camera a garment under controlled conditions to obtain a two-dimensional image 1 of same, and
b) using said computer means, in this case said computer program, to define a series of reference points P in said acquired two-dimensional image 1 of said garment, and generating a series of measurements relating to the position of said reference points P relating to horizontal and vertical coordinates and/or relating to the distance between said reference points P.

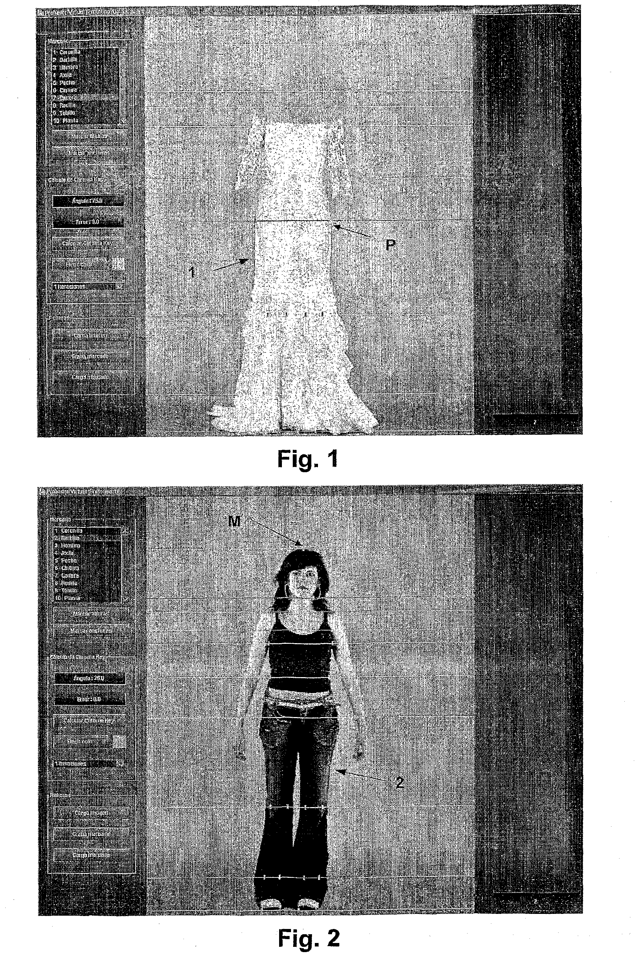

Figure 1 shows the image 1 or photograph acquired in step a), which in this case is an image of a dress, together with the mentioned reference points P, which in the left part of Figure 2 are clustered according to the part of the body they belong to by means of a series of indications: chest, waist, hips, etc.

Before or after said steps a) and b), the method comprises performing the following steps:
c) photographing, by means of said camera, a person under controlled conditions to obtain a two-dimensional image 2 of same, and
d) using said computer means, in this case said computer program, to define a series of reference marks M in said acquired two-dimensional image 2 of said user, which is at least one in number, in said step c), and generating a series of measurements relating to the position of said reference marks M relating to horizontal and vertical coordinates and/or relating to the distance between said reference marks M.

Figure 2 shows similarly as in Figure 1 the image 2 or photograph acquired in step c) together with the mentioned reference marks M, which in the left part of Figure 2 are clustered according to the part of the body they belong to by means of the same indications used for the reference points P of the dress shown in Figure 1, i.e.: chest, waist, hips, etc.

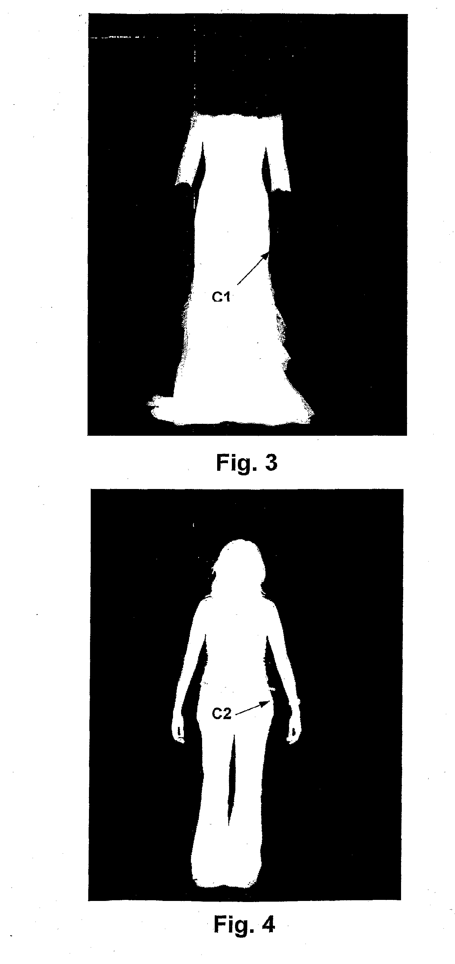

Once steps a), b), c) and d) are performed, the proposed method comprises sequentially performing the following steps:
e) obtaining, by said computer means, the outline of said garment C1 (see Figure 3) and of said user C2 (see Figure 4), by means of the analysis of said two-dimensional images 1, 2 acquired in steps a) and c),
f) using data relating to said acquired image of the garment 1, at least in reference to said measurements generated in step b) and to said outline of said garment C1 obtained in step e), to generate, by means of said computer means, a two-dimensional graphic representation of same in the form of a flat surface, using polymeshes or parametric surfaces,
g) using said computer means to geometrically superimpose said flat surface generated in step f) on the user's outline C2 obtained in step e),
h) progressively adapting said flat surface to the user's outline C2, said adaptation consisting of an emulation of at least the drape of said garment on said user, and said adaptation being carried out by means of performing a mathematical simulation in relation to the garment using the computer means, taking into account a series of representative parameters of physical properties of the fabric of the garment and the data contained in said flat surface, considering said adaptation to be concluded when said simulation stabilizes or converges, and
i) displaying an image 3 of the user wearing said garment on the display means by superimposing the representative image of the user 2 with an image of the garment obtained from the two-dimensional image of the garment 1 acquired in step a), after applying the changes experienced by said representative flat surface of the garment after said adaptation of said step h).

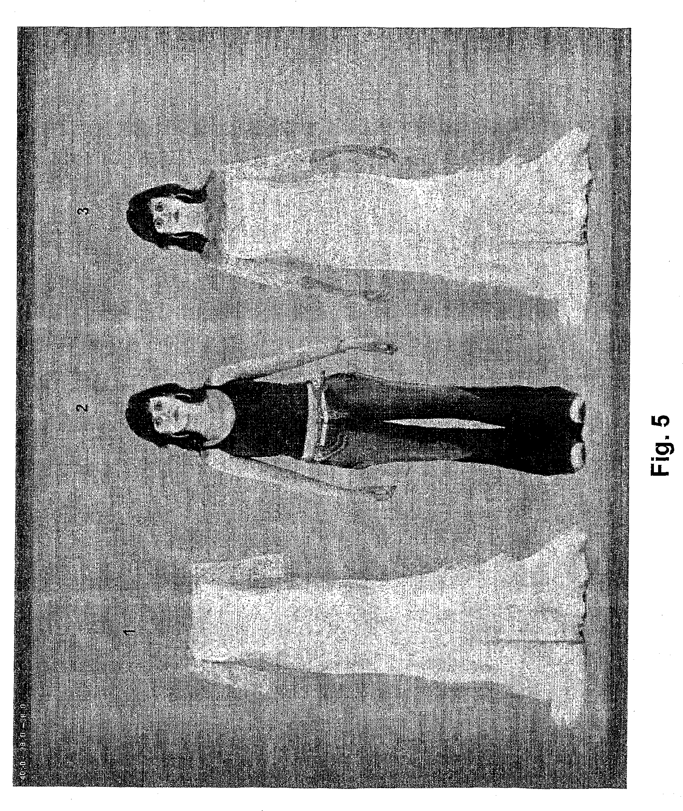

Figure 5 shows the two two-dimensional images 1, 2 acquired in a) and c), and to the right of the image also shows the resulting image 3 shown according to step i), the parts relating to the person coinciding in image 3 with those of image 2, however this is not the case of the parts relating to the dress with those of the image 1 because the latter has been adapted to the represented person according to the mentioned steps h) and i) of the method proposed by the present invention.

Although only a single garment has been represented in the attached figures, the method comprises performing said steps a) and b) for a plurality of garments, at least in part different from one another, the user being able to select one or more garments to be tried on out of a virtual garment library containing a plurality of images 1 obtained when said plurality of garments have been previously subjected to said step a), or to said steps a) and b), before or after said steps c) and d), and the remaining steps e) a h) have been performed for said selected garment or garments, or the user being able to make the selection before the garments have been subjected to steps a) and b), i.e. selecting real garments and later photographing only the selected garments, i.e. performing steps a) and b) only with the selected garments, and performing the remaining steps c) to h) for said selected garment or garments.

In relation to the physical properties represented by said parameters in step h), they are chosen depending on their relevance or influence in the performance of the materials of the garment, examples of physical properties to be taken into account being the following: density, elasticity, folding strength, shear strength and coefficient of friction.

For a preferred embodiment, a combination of the mentioned physical properties is taken into account and preferably all of them are taken into account for a more realistic adaptation of the garment to the person.

In relation to the mentioned controlled conditions of steps a) and c), these conditions are at least one of the group comprising: the position of the camera, the focal distance, the position of the garments and/or of the user and the lighting, though preferably all of said conditions are taken into account.

For a preferred embodiment, the mentioned obtaining of said outlines C1, C2 of said step e) is performed by means of using techniques based on chroma key or color key.

The present invention relates in a second aspect to a virtual fitting room system comprising computer means, at least one image acquisition unit, such as a camera, and display means associated to one another, said system being adapted to perform the proposed method according to the first aspect of the present invention.

The proposed system comprises a uniform color panel that can be used as a background behind said user and said garment to enable said obtaining of said outlines C1, C2 by means of said techniques based on chroma key or color key.

A person skilled in the art could introduce changes and modifications in the embodiments described without departing from the scope of the invention as it is defined in the attached claims.

## Claims

1. A method of generating and using a virtual fitting room, which comprises using computer means associated at least to an image acquisition unit and to display means, to perform the following steps:
a) acquiring, by means of said image acquisition unit, a two-dimensional image (1) of at least one garment under controlled conditions,
b) using said computer means to define a series of reference points (P) in said acquired two-dimensional image (1) of said garment, which is at least one in number, in said step a), and generating a series of measurements relating to the position of said reference points (P) relating to horizontal and vertical coordinates and/or relating to the distance between said reference points (P),
c) acquiring a two-dimensional image (2) of at least one user in controlled conditions by means of said image acquisition unit,
d) using said computer means to define a series of reference marks (M) in said acquired two-dimensional image (2) of said user, which is at least one in number, in said step c), and generating a series of measurements relating to the position of said reference marks (M) relating to horizontal and vertical coordinates and/or relating to the distance between said reference marks (M),
being able to first perform steps a) and b) and then steps c) and d) or vice versa, and in that it comprises sequentially performing the following steps after said steps a) to d):
e) obtaining, by said computer means, the outline of said garment (C1) and of said user (C2) by means of the analysis of said two-dimensional images (1 , 2) acquired in steps a) and c),
f) using data relating to said acquired image of the garment (1), at least in reference to said measurements generated in step b) and to said outline of said garment (C1) obtained in step e), to generate by said computer means a two-dimensional graphic representation of the garment in the form of a flat surface by using polymeshes or parametric surfaces,
g) using said computer means to geometrically superimpose said flat surface generated in step f) on the user's outline (C2) obtained in step e),
h) progressively adapting said flat surface of step f) to the user's outline (C2), said adaptation consisting of an emulation of at least the drape of said garment on said user, and said adaptation being carried out by performing a mathematical simulation in relation to the garment using the computer means, taking into account a series of representative parameters of physical properties of the fabric of the garment and the data contained in said flat surface, and
i) displaying an image (3) of the user wearing said garment on the display means by superimposing the representative image of the user (2) with an image of the garment obtained from the two-dimensional image of the garment (1) acquired in step a), after applying the changes experienced by said representative flat surface of the garment after said adaptation of said step h).

2. A method according to claim 1, **characterized in that** it comprises performing said steps a) and b) for a plurality of garments at least in part different from one another.

3. A method according to claim 2, **characterized in that** it comprises said user selecting before said step e) one or more two-dimensional images 1 of garments to be tried on out of a plurality of two-dimensional images 1 obtained after said plurality of garments have been subjected to said step a) or to said steps a) and b), and performing the remaining steps e) to h) for said selected garment or garments.

4. A method according to claim 2, **characterized in that** it comprises said user selecting one or more actual garments to be tried on virtually out of said plurality of garments before having been subjected to said steps a) and b), performing said steps a) and b) only with said selected garment or garments and performing steps e) to h) for said selected garment or garments.

5. A method according to claim 1, **characterized in that** said physical properties represented by said parameters in step h) are at least one of the group comprising the following physical properties: density, elasticity, folding strength, shear strength and coefficient of friction, or a combination thereof.

6. A method according to any of the previous claims, **characterized in that** said physical properties represented by said parameters in step h) are chosen depending on their relevance or influence on the performance of the materials of the garment.

7. A method according to claim 1, **characterized in that** it comprises considering said adaptation of said step h) to be concluded when said simulation stabilizes or converges.

8. A method according to claim 1, **characterized in that** said image acquisition means comprise a camera and **in that** said acquired images (1, 2) are photographs.

9. A method according to claim 8, **characterized in that** said controlled conditions are at least one of the group comprising: the position of the camera, the focal distance, the position of the garment and/or of the user and the lighting.

10. A method according to claim 1, **characterized in that** said outlines (C1, C2) of said step e) are obtained by means of using techniques based on chroma key or color key.

11. A virtual fitting room system comprising computer means, at least one image acquisition unit and display means associated to one another, **characterized in that** it is adapted to perform the proposed method according to any one of the previous claims.

12. A system according to claim 11 when it depends on claim 10, **characterized in that** it comprises a uniform color panel that can be used as a background behind said user and said garment to enable said obtaining of outlines by means of said techniques based on chroma key or color key.
